# EUROPÄISCHE PATENTSCHRIFT

(11) **EP 3 180 221 B1**
(45) Veröffentlichungstag und Bekanntmachung des Hinweises auf die Patenterteilung: **31.10.2018**
(21) Anmeldenummer: 15747425.5
(22) Anmeldetag: 30.07.2015
(51) Int. Cl.: B60W 50/08, B60W 50/14, B60K 28/06, B60W 40/08, B60W 30/10, B60W 30/14

(54) **FAHRERASSISTENZSYSTEM**
DRIVER ASSISTANCE SYSTEM
SYSTÈME D'AIDE AU CONDUCTEUR

(30) Priorität: 15.08.2014 DE 102014216272
(43) Veröffentlichungstag der Anmeldung: 21.06.2017
(73) Patentinhaber: Robert Bosch GmbH, 70442 Stuttgart (DE)
(72) Erfinder: SCHERL, Michael, 74321 Bietigheim (DE); MIELENZ, Holger, 73760 Ostfildern (DE); MARBERGER, Claus, 71263 Weil der Stadt (DE); PAGEL, Michael, 71640 Ludwigsburg (DE)
(86) Internationale Anmeldenummer: PCT/EP2015/067559
(87) Internationale Veröffentlichungsnummer: WO 2016/023767

(56) Entgegenhaltungen:
- EP-A2- 2 392 501
- DE-A1-102011 101 708
- DE-A1-102011 101 709
- DE-A1-102011 121 260
- DE-A1-102012 213 965
- DE-A1-102012 215 397

## Beschreibung

### Stand der Technik

Die Erfindung betrifft ein Fahrerassistenzsystem für ein Fahrzeug, das ausgebildet ist, das Fahrzeug während einer teilautomatisierten Fahrt zu führen.

Systeme zur Automatisierung der Fahrzeugführung können gemäß Gasser, T. et al. "Rechtsfolgen zunehmender Fahrzeugautomatisierung" (2012), Berichte der Bundesanstalt für Straßenwesen, Fahrzeugtechnik, Heft 83. Bremerhaven: Wirtschaftsverlag NW, anhand Ihres Grads in unterschiedliche Stufen - von "manuell" bis "vollautomatisiert" (sog. BASt-Klassifikation) eingeteilt werden. Die Stufe der "Teilautomatisierung" ist dadurch gekennzeichnet, dass das System sowohl die Längs- als auch Querregelung in bestimmten Situationen und für einen gewissen Zeitraum übernehmen kann. Der Fahrer muss das System dabei dauerhaft überwachen und jederzeit zur vollständigen Übernahme der Fahrzeugführung bereit sein. Teilautomatisierte Systeme werden aktuell von verschiedenen Automobilherstellern für die Situation "Staufahren auf Autobahn" angeboten. Es gibt Bemühungen, den Geschwindigkeitsbereich und die Einsatzmöglichkeiten (z.B. auch im urbanen Bereich) zu erweitern.

Das Konzept der Teilautomatisierung wird in der Fachwelt kritisch diskutiert. Durch die rasch abnehmende Vigilanz bei einer gut funktionierenden Automation können vom Fahrer seltene Fehler oder Gefahrensituationen nur schwer bzw. verzögert entdeckt werden, wie in Vollrath, M., Schleicher, S., & Gelau, C. (2011), The influence of cruise control and adaptive cruise control on driving behaviour -a driving simulator study. Accident Analysis and Prevention, 43(3), 1134-1139, beschrieben ist. Unter dem Begriff "Vigilanz" wird dabei die Daueraufmerksamkeit einer Person zur Erkennung von Veränderungen in der Umwelt verstanden.

In Dokument DE 10 2011101708 A1 wird ein Verfahren zum automatischen Steuern eines Kraftfahrzeugs, sowie ein Steuermittel zur Durchführung eines solchen Verfahrens beschrieben. Hierbei wird die Verkehrswahrnehmung des Fahrers überwacht, indem der Fahrer dazu aufgefordert wird, eine Eingabe zu betätigen. Erfolgt diese Eingabe nicht, erfolgt eine Warnung und zusätzlich kann das Kraftfahrzeug automatisch gelenkt und/oder gebremst werden.

In Dokument DE 10 2011101 709 A1 wird ein System zur automatischen Fahrzeugsteuerung beschrieben. Dabei ist auch eine Bedieneinheit zur Eingabe von Informationen, wie z.B. die zu fahrende Geschwindigkeit, in das Steuermittel des Fahrzeugs vorgesehen. Die Bedieneinheit weist außerdem eine Quittiereinrichtung zur Quittierung einer Eingabeaufforderung zur Überprüfung einer Verkehrswahrnehmung eines Fahrzeugführers des Fahrzeugs auf. Die Aufforderung zur Eingabe kann hierbei auch zeitlich variieren. Erfolgt die Eingabe durch den Fahrer nicht, folgt eine automatisch vorgegebene Reaktion durch das Steuermittel, wie beispielsweise eine Warnung oder ein Bremsvorgang des Fahrzeugs.

Es besteht die Gefahr, dass das sogenannte Situationsbewusstsein eingetrübt wird. Dies könnte für eine konkrete Fahrsituation ein erhöhtes Sicherheitsrisiko im Vergleich zur manuellen Fahrt bedeuten. Gleichzeitig wird die Überwachungsaufgabe von Menschen als kognitiv sehr beanspruchend empfunden. Insgesamt könnte also durch die Teilautomatisierung das Fahrerleben sogar negativer wahrgenommen werden als bei der manuellen Fahrzeugführung.

Hinzu kommt, dass gerade beim unterstützten Fahren der Anreiz für den Fahrer wächst, sich während der Fahrt mit Nebentätigkeiten, wie z.B. Lesen, Telefonieren, SMS oder E-Mails Lesen oder Schreiben, etc., zu beschäftigen, was seine Aufmerksamkeit bzw. Vigilanz weiter beeinträchtigen kann und gegebenenfalls dazu führt, dass Gefahrensituationen nicht rechtzeitig vom Fahrer erkannt und eingeschätzt werden können.

Damit teilautomatisierte Systeme nicht zu einer Vernachlässigung der Überwachungsaufgabe beim Fahrer führen, werden Maßnahmen zur Fahrerüberwachung diskutiert, die gegebenenfalls zu einer Deaktivierung der Automatisierung führen können, wenn sich der Fahrer zu stark mit Nebenaufgaben beschäftigt.

Aufgabe der Erfindung ist, die Teilautomatisierung so zu gestalten, dass kritische Vigilanzminderungen oder der Verlust des Situationsbewusstseins erst gar nicht auftreten und gleichzeitig der subjektive Nutzen der Automatisierung bzgl. Komfort und Sicherheit erhalten bleibt. Aus der wissenschaftlichen Auseinandersetzung mit dem Problem der sogenannten Vigilanzreduktion ist bekannt, dass kurze Perioden einer Automatisierung gut überwacht werden können, siehe z.B. Parasuraman, R., Mouloua, M., & Molloy, R. (1996). Effects of adaptive task allocation on monitoring of automated systems. Human Factors, 38(4), 665-679.

### Offenbarung der Erfindung

Erfindungsgemäß wird ein Fahrerassistenzsystem für ein Fahrzeug vorgeschlagen, das ausgebildet ist, die Fahrzeugführung durch Teilautomatisierung und Kooperation mit dem Fahrer zu übernehmen. Das Fahrerassistenzsystem umfasst dabei mindestens ein Bedienelement, das beim Auftreten bestimmter Fahrsituationen vom Fahrer betätigt werden muss, wodurch die Vigilanz und die Aufmerksamkeit des Fahrers während der Durchführung einer teilautomatisiert durchgeführten Fahrt sichergestellt ist. Abhängig von der Betätigung des Bedienelements wird das aktuell durchgeführte teilautomatisierte Fahrmanöver bzw. die teilautomatisierte Fahrt fortgeführt, in der Ausführung angepasst oder beendet. Dieser Mechanismus wird vorzugsweise in Fahrsituationen angewendet, in denen die Fortsetzung des aktuellen Fahrmanövers potentiell sicherheitskritisch wird und der Fahrer in die teilautomatisierte Fahrzeugführung einbezogen werden soll. Diese Situationen sind erfindungsgemäß auf Basis von Kartendaten dem System bekannt. Damit wird die Aufmerksamkeit und die Vigilanz des Fahrers auch während des automatisiert durchgeführten Fahrmanövers erhalten und die Sicherheit des Systems bei teilautomatisierter Fahrt insgesamt verbessert.

Unter einer teilautomatisiert durchgeführten Fahrt im Sinne der Erfindung kann das Abfahren einer bestimmten Route in einer urbanen Umgebung verstanden werden, bei der beispielsweise der Zielpunkt vom Fahrer vorgegeben wird und die Route in bekannter Weise durch ein Navigationssystem berechnet wird. Das Fahrerassistenzsystem ist ausgebildet, das Fahrzeug automatisch entlang der berechneten Route zu führen. Die teilautomatisierte Fahrt kann als Abfolge von einzelnen, automatisch vom Fahrerassistenzsystem durchgeführten Fahrmanövern (wie z.B. "Geradeausfahren", "Links Abbiegen", "Anhalten", "Anfahren",..) verstanden werden, wobei der Fahrer während der gesamten Fahrt durch Betätigung eines oder mehrerer Bedienelemente Einfluss auf das aktuell durchgeführte Fahrmanöver nehmen kann.

Die Erfindung betrifft weiterhin ein Verfahren zur Sicherstellung der Vigilanz und der Aufmerksamkeit eines Fahrers eines Fahrzeugs während eines teilautomatisierten Fahrmanövers. Erfindungsgemäß wird auf Basis von Kartendaten beim Auftreten bestimmter Fahrsituationen der Fahrer aufgefordert, ein Bedienelement zu betätigen, wobei das teilautomatisierte Fahrmanöver abhängig von der Betätigung des Bedienelements fortgeführt, in der Ausführung angepasst oder beendet wird.

In einer möglichen Ausprägung übt das Betätigen des Bedienelements direkten Einfluss auf das Fahrverhalten des Fahrzeugs aus. Mit anderen Worten ist das Bedienelement direkt mit dem Antriebsstrang bzw. der Lenkung des Fahrzeugs gekoppelt und der Fahrer greift durch einen Lenk-, Brems- oder Beschleunigungsvorgang direkt in das automatisierte Fahrmanöver ein. Dazu kann das Bedienelement beispielsweise durch ein Lenkrad, einen Lenkstockhebel, ein Gaspedal oder ein Bremspedal gebildet sein. Der Fahrer kann bevorzugt während der gesamten teilautomatisierten Fahrt durch Betätigen der Bedienelemente in die Fahrzeugführung eingreifen (Prinzip der "kontinuierlichen Kontrolle").

Alternativ oder zusätzlich kann vorgesehen sein, dass das Betätigen des Bedienelements während eines aktuellen Fahrmanövers ein spezifisches, anschließendes Fahrmanöver auslöst. Beispielsweise kann durch das Betätigen des Blinkers ein automatisiert vom Fahrerassistenzsystem durchgeführter Spurwechsel ausgelöst oder durch Betätigen des Bremspedals ein automatisierter Anhaltevorgang eingeleitet werden (Prinzip der "kommandobasierten Kontrolle").

Alternativ oder zusätzlich kann vorgesehen sein, dass das Betätigen des Bedienelements oder die kombinierte Betätigung mehrerer Bedienelemente die Teilautomatisierung vor einem potentiell sicherheitskritischen Fahrmanöver temporär deaktiviert. Nach manueller Durchfahrt des kritischen Bereichs wird dem Fahrer die Reaktivierung der Automatisierung angeboten. Beispielsweise wird der Fahrer bei Annäherung an einen Zebrastreifen aufgefordert, die Fahrzeugkontrolle durch Berührung/Betätigung von Lenkrad und Pedalerie wieder zu übernehmen. Danach kann er die Automatisierung beispielsweise durch Betätigung einer Lenkradtaste wieder reaktivieren (Prinzip der "wechselnden Kontrolle").

Kern der Erfindung ist demnach eine kooperative Systemauslegung der Teilautomatisierung, die den Fahrer in regelmäßigen Abständen in die Fahrzeugführung mit einbezieht. Das Fahrerlebnis ist - vor allem im urbanen Bereich - geprägt von einem Wechsel aus automatisierten, kooperativen (kontinuierlich oder kommandobasiert) oder manuellen Phasen.

Die Einbindung des Fahrers an bekannten Systemgrenzen, also Fahrsituationen in denen die Fortsetzung des aktuellen Fahrmanövers potentiell sicherheitskritisch wird und die erfindungsgemäß auf Basis von Kartendaten dem System bekannt sind, wird durch ein geeignetes Anzeigekonzept angekündigt und verständlich erläutert, zum Beispiel durch geeignete Symbole und/oder Animationen auf einem Display. Die Einflussmöglichkeiten des Fahrers orientieren sich an bekannten Interaktionskonzepten aus der manuellen Fahrzeugführung (z.B. über Fußpedalerie, Lenkstockhebel).

Die dadurch generell verbesserte Daueraufmerksamkeit des Fahrers, die sogenannte Vigilanz führt auch dazu, dass nicht angekündigte, notwendige bzw. sicherheitsrelevante Systemgrenzen vom Fahrer rechtzeitig erkannt werden können.

Vorzugsweise ist das Fahrerassistenzsystem eingerichtet, das aktuell durchgeführte teilautomatisierte Fahrmanöver vor dem Erreichen der Systemgrenzen (z.B. einem Zebrastreifen) in kontrollierter Weise in einen risikoarmen Zustand zu überführen, wenn der Fahrer die erforderliche Betätigung des Bedienelements unterlässt. Dies kann im Niedriggeschwindigkeitsbereich beispielsweise ein Anhalten auf dem aktuell befahrenen Fahrstreifen sein. Alternativ, kann bei ausbleibender Reaktion des Fahrers auch das aktuelle Fahrmanöver (z.B. der Spur folgen) fortgesetzt werden.

Es ist von Vorteil, wenn dem Fahrer durch visuelle und/oder akustische und/oder haptische Signale mitgeteilt wird, dass er nun die Kontrolle über das Fahrzeug ausübt. Das Fahrzeug kann vor der Kontrollübergabe an den Fahrer in einen sicheren Zustand verbracht werden, beispielsweise am Fahrbahnrand angehalten werden.

Das Fahrerassistenzsystem umfasst bevorzugt mindestens ein Anzeigemittel, das eingerichtet ist, dem Fahrer Hinweise zur Fahrsituation und/oder zur Betätigung des Bedienelements zu geben. Dabei kann es sich beispielsweise um einen Bildschirm, wie ein HUD (Head-up Display) handeln. Alternativ oder zusätzlich kann ein akustisches Signal bzw. eine Ansage erfolgen. Das Anzeigemittel ist demnach bevorzugt ausgebildet, akustische und/oder visuelle und/oder haptische Hinweise auszugeben.

Mögliche Fahrsituationen, bei deren Auftreten der Fahrer das Bedienelement betätigen muss, können bevorzugt mindestens eine der folgenden Fahrsituationen sein:
a. Anhalten an einem Zebrastreifen
b. Anhalten und/oder Anfahren an einer Ampel
c. Vorfahrt Achten
d. Spurwechsel

Selbstverständlich ist die Erfindung nicht auf die genannten Fahrsituationen beschränkt, sondern kann auch bei anderen Fahrsituationen zum Einsatz kommen.

Dabei kann auch vorgesehen sein, dass bei unterschiedlichen Fahrsituationen unterschiedliche Bedienelemente zu betätigen sind. Besonders bevorzugt sind solche Bedienelemente vorgesehen, die für den Fahrer intuitiv zu der jeweiligen Fahrsituation passen, also z.B. das Betätigen des Blinkers als Bedienelement für einen automatisierten Spurwechsel oder das Betätigen des Bremspedals als Bedienelement für einen automatisierten Anhaltevorgang an einer Kreuzung oder das Betätigen des Gaspedals zur Fortsetzung der automatisierten Fahrt.

Bevorzugt ist vorgesehen, dass das Fahrmanöver nicht nur in den zuvor beschriebenen Situationen durch die Betätigung eines Bedienelements beinflussbar ist, sondern jederzeit durch den Fahrer beeinflusst werden kann. Der Fahrer kann demnach die Kontrolle über das Fahrzeug jederzeit übernehmen oder das aktuell ausgeführte Fahrmanöver beeinflussen, wobei die Eingaben des Fahrers Vorrang vor den automatisiert durchgeführten Fahrmanövern haben.

### Kurze Beschreibung der Zeichnung

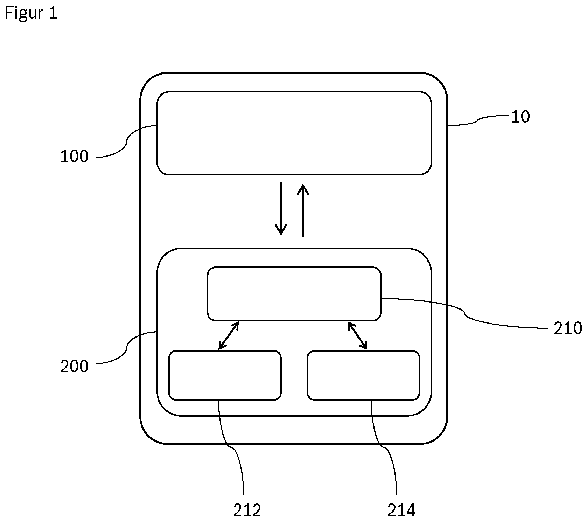

Figur 1 stellt schematisch die Funktion eines erfindungsgemäßen Fahrerassistenzsystems dar.

### Ausführungen der Erfindung

Figur 1 zeigt ein Schema eines Fahrerassistenzsystems 10 nach einem sogenannten kooperativen Konzept zur teilautomatisierten Fahrzeugführung gemäß der Erfindung. In einem sogenannten manuellen Betrieb 100 hat der Fahrer allein die volle Kontrolle über das Fahrzeug. Nach Aktivierung der Teilautomatisierung 200 wird das Fahrzeug durch das Fahrerassistenzsystem geführt. Das Fahrzeug wird automatisch entlang der vorgegebenen Route geführt 210. Der Fahrer wird entweder durch eine kontinuierliche, kooperative Kontrolle 212 oder eine kommandobasierte Kontrolle 214 von Fahrmanövern in bestimmten Fahrsituationen oder durch die temporäre Übernahme der Fahrzeugkontrolle 100 im Fahrgeschehen gehalten und seine Aufmerksamkeit (Vigilanz) sichergestellt.

Im Folgenden werden erfindungsgemäße Beispiele für mögliche Mechanismen beschrieben, wie der Fahrer während der teilautomatisierten Fahrt im Fahrgeschehen gehalten werden kann.

Kern der Erfindung ist ein Wechsel der Zustände wie in Figur 1 dargestellt, wodurch der Fahrer immer wieder in das Fahrgeschehen durch sogenannte kooperative Methoden einbezogen wird. Unter einer kooperativen Methode soll im Folgenden ein Ansatz verstanden werden, bei dem der Fahrer während einer teilautomatisierten Fahrt aktiv in die Fahrzeugführung miteinbezogen wird:
- Die Kooperation durch "kontinuierliche Kontrolle": Die Ausführung von Fahrmanövern wird nicht nur durch die automatisierte Fahrzeugregelung, sondern bei Bedarf, vor allem beim Auftreten bestimmter Fahrsituationen, auch zusätzlich durch Eingriff des Fahrers über konventionelle Bedienelemente beeinflusst.
- Kooperation durch "kommandobasierter Kontrolle": Erforderliche oder empfohlene zukünftige Fahrmanöver werden durch geeignete Interaktionsmethoden zwischen Fahrer und Fahrzeug ausgelöst. Das Fahrmanöver selbst wird anschließend durch die Automatisierung vollständig durchgeführt.
- Kooperation durch "wechselnde Kontrolle": vor Erreichen einer Systemgrenze wird der Fahrer aufgefordert, die Fahrzeugkontrolle komplett zu übernehmen. Danach kann er die Automatisierung wieder reaktivieren.

Alle kooperativen Methoden können mit unterschiedlichen Automatisierungsstrategien bei ausbleibender Fahrerreaktion kombiniert werden. In einer bevorzugten Ausprägung wird das Fahrzeug an bekannten Systemgrenzen automatisch in einen risikoarmen Zustand überführt (z.B. Anhalten auf eigenem Fahrstreifen bei niedrigen Geschwindigkeiten). Alternativ kann an Systemgrenzen bei Ausbleiben einer Fahrerreaktion das aktuelle Fahrmanöver (z.B. Spurverlauf folgen) fortgesetzt werden.

Ein Beispiel für ein solches kooperatives Interaktionskonzept in der Fahrsituation "Vorfahrt Achten" sei im Folgenden näher beschrieben:
Nach Eingabe des Navigationsziels durch den Fahrer und der Festlegung der Route ist das Fahrerassistenzsystem prinzipiell in der Lage, die Längs- und Querregelung auf der Route zu übernehmen. Es verhält sich dabei, als gäbe es nur das eigene und das vorausfahrende Fahrzeug. Stellen entlang der Route, an denen andere Verkehrsteilnehmer möglicherweise vorfahrtsberechtigt sind (z.B. an einer Ampel, bei einem "Vorfahrt-Achten-Schild" oder einem Zebrastreifen), werden dem Fahrer rechtzeitig visuell und/oder akustisch angekündigt. Die Positionen dieser Stellen sind aus den Kartendaten bekannt, auf denen die Routenplanung beruht.

Die Aufgabe des Fahrers ist, das Fahrzeug bei Bedarf durch einen kooperativen Bremseingriff - also durch Betätigung des Bremspedals, das in diesem Beispiel als Bedienelement wirkt, abzubremsen bzw. anzuhalten (212). Nach dem Eingriff wird die teilautomatisierte Fahrt fortgesetzt. Der Fahrer kann auf die Durchführung der teilautomatisierten Fahrt weiterhin Einfluss nehmen. Falls z.B. die Beschleunigung beim Anfahren in einer spezifischen Verkehrssituation subjektiv nicht ausreichen sollte, kann der Fahrer durch zusätzliche Gaspedalbetätigung die Teilautomatisierung temporär übersteuern.

Alternativ zu der oben beschriebenen Methode der kooperativen Kontrolle, kann vor Erreichen von Systemgrenzen, also Fahrsituationen, in denen die Fortsetzung des aktuellen Fahrmanövers potentiell sicherheitskritisch werden kann und der Fahrer in die teilautomatisierte Fahrzeugführung einbezogen werden sollte, in jedem Fall ein erwünschter Anhaltevorgang auch automatisiert eingeleitet werden. Die Aufgabe des Fahrers besteht dann darin, eine Fortsetzung der Fahrt (214) durch Betätigung eines geeigneten Bedienelement (z. B. Antippen des Gaspedals oder durch Betätigung eines Lenkstockhebels) zu betätigen (kommandobasierte Kontrolle).

Alternativ kann der Fahrer während des automatisierten Anhaltevorgangs dazu aufgefordert werden, die Kontrolle komplett durch Berührung/Betätigung eines Bedienelements oder mehrerer Bedienelemente zu übernehmen. Nach manueller Durchfahrt der Fahrsituation kann die Automatisierung wieder reaktiviert werden (wechselnde Kontrolle).

Ein weiteres Beispiel für ein erfindungsgemäßes kooperatives Interaktionskonzept in der Fahrsituation "Fahrspurwechsel" sei im Folgenden näher beschrieben:
Das Fahrerassistenzsystem führt auf der Route keine automatischen Spurwechsel durch. Wenn für die Routenführung ein Fahrspurwechsel nötig ist und der Fahrer dazu vom System aufgefordert wird oder der Fahrer an anderen Stellen auf eigenen Wunsch einen Spurwechsel vornehmen möchte, kann das entsprechende Fahrmanöver durch Betätigung eines insbesondere zweistufigen Blinkerhebels in die entsprechende Richtung ausgelöst werden (kommandobasierte Kontrolle). Zur Signalisierung des geplanten Manövers dient z.B. die erste Stufe des Blinkerhebels, die zweite Stufe initiiert dann den automatischen Spurwechsel. Der Fahrer bleibt für die Absicherung des umgebenden Verkehrs verantwortlich. Der Fahrer hat dabei jederzeit die Möglichkeit über die Methode "kontinuierliche Kontrolle", durch Betätigen des Bremspedals und des Gaspedals die Geschwindigkeit des Fahrspurwechsels anzupassen. Alternativ kann der Fahrer vor notwendigen Spurwechseln auch vom System aufgefordert werden, die Fahrzeugkontrolle komplett für dieses Manöver zu übernehmen (Methode der "wechselnden Kontrolle").

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Fahrerassistenzsystem für ein Fahrzeug, das ausgebildet ist, das Fahrzeug bei einer teilautomatisierten Fahrt zu führen, **dadurch gekennzeichnet, dass** das Fahrerassistenzsystem mindestens ein Bedienelement umfasst, das auf Basis von Kartendaten beim Auftreten bestimmter Fahrsituationen vom Fahrer betätigt werden muss, wodurch die Vigilanz des Fahrers während der Durchführung der teilautomatisierten Fahrt sichergestellt ist, und wobei das teilautomatisierte Fahrmanöver (200) abhängig von der Betätigung des Bedienelements fortgeführt, in der Ausführung angepasst oder beendet wird.

2. Fahrerassistenzsystem nach Anspruch 1, das eingerichtet ist, das aktuelle teilautomatisierte Fahrmanöver (200) zu unterbrechen oder abzubrechen oder das Fahrzeug in einen risikoarmen Zustand zu überführen oder das aktuelle teilautomatisierte Fahrmanöver (200) fortzusetzen, wenn der Fahrer das Betätigen des Bedienelements unterlässt.

3. Fahrerassistenzsystem nach einem der Ansprüche 1 oder 2, wobei das Fahrerassistenzsystem mindestens ein Anzeigemittel umfasst, das eingerichtet ist, dem Fahrer Hinweise zu der Fahrsituation und/oder zur Betätigung des Bedienelements zu geben.

4. Fahrerassistenzsystem nach Anspruch 3, **dadurch gekennzeichnet, dass** das Anzeigemittel ausgebildet ist, akustische und/oder visuelle und/oder haptische Hinweise auszugeben.

5. Fahrerassistenzsystem nach einem der Ansprüche 1 bis 4, **dadurch gekennzeichnet, dass** die Fahrsituation, bei deren Auftreten der Fahrer das Bedienelement betätigen muss, mindestens eine der folgenden Fahrsituationen ist:
a. Anhalten an einem Zebrastreifen
b. Anhalten und/oder Anfahren an einer Ampel
c. Vorfahrt Achten
d. Spurwechsel

6. Fahrerassistenzsystem nach einem der Ansprüche 1 bis 5, **dadurch gekennzeichnet, dass** das Fahrmanöver durch die Betätigung eines Bedienelements jederzeit durch den Fahrer beeinflussbar ist.

7. Fahrerassistenzsystem nach einem der Ansprüche 1 bis 6, **dadurch gekennzeichnet, dass** mindestens ein Bedienelement ausgebildet ist, direkt Einfluss auf die Längs- oder Querführung des Fahrzeugs zu nehmen, dass ein Bedienelement insbesondere durch das Lenkrad und/oder das Gaspedal und/oder das Bremspedal des Fahrzeugs gebildet ist.

8. Fahrerassistenzsystem nach einem der Ansprüche 1 bis 7, **dadurch gekennzeichnet, dass** mindestens ein Bedienelement ausgebildet ist, nach der Betätigung durch den Fahrer ein bestimmtes Fahrmanöver auszulösen, insbesondere ein Abbremsen bis zum Stillstand und/oder einen Spurwechsel, wobei das ausgelöste Fahrmanöver automatisiert von dem Fahrerassistenzsystem durchgeführt wird.

9. Fahrerassistenzsystem nach einem der Ansprüche 1 bis 8, **dadurch gekennzeichnet, dass** mindestens ein Bedienelement ausgebildet ist, nach der Betätigung durch den Fahrer die Kontrolle an den Fahrer vollständig zu übergeben.

10. Verfahren zur Sicherstellung der Vigilanz eines Fahrers eines Fahrzeugs während einer teilautomatisiert durchgeführten Fahrt, **dadurch gekennzeichnet, dass** auf Basis von Kartendaten beim Auftreten bestimmter Fahrsituationen der Fahrer aufgefordert wird, ein Bedienelement zu betätigen, wobei das teilautomatisierte Fahrmanöver abhängig von der Betätigung des Bedienelements fortgeführt, in der Ausführung angepasst oder beendet wird.

11. Verfahren nach Anspruch 10, **dadurch gekennzeichnet, dass** das Betätigen des Bedienelements direkten Einfluss (212) auf das Fahrverhalten des Fahrzeugs ausübt.

12. Verfahren nach Anspruch 10, **dadurch gekennzeichnet, dass** das Betätigen des Bedienelements ein bestimmtes automatisch durchgeführtes Fahrmanöver (214) auslöst.

13. Verfahren nach Anspruch 10, **dadurch gekennzeichnet, dass** das Betätigen des Bedienelements ein vollständiges Übergeben der Kontrolle an den Fahrer auslöst.

## Claims

1. Driver assistance system for a vehicle which is designed to drive the vehicle during partially automated travel, **characterized in that** the driver assistance system comprises at least one operator control element which has to be activated by the driver on the basis of map data when specific driving situations occur, as a result of which it is ensured that the driver is vigilant while the partially automated travel is being carried out, and wherein the partially automated driving manoeuvre (200) is continued, adapted in its execution or ended depending on the activation of the operator control element.

2. Driver assistance system according to Claim 1 which is configured to interrupt or abort the current partially automated driving manoeuvre (200) or to change the vehicle to a low-risk state or to continue the current partially automated driving manoeuvre (200) if the driver refrains from activating the operator control element.

3. Driver assistance system according to one of Claims 1 and 2, wherein the driver assistance system comprises at least one display means which is configured to provide the driver with instructions relating to the driving situation and/or relating to the activation of the operator control element.

4. Driver assistance system according to Claim 3, **characterized in that** the display means is designed to output acoustic and/or visual and/or haptic instructions.

5. Driver assistance system according to one of Claims 1 to 4, **characterized in that** the driving situation at whose occurrence the driver has to activate the operator control element is at least one of the following driving situations:
a. Stopping at a zebra crossing
b. Stopping and/or starting at a set of traffic lights
c. Giving way
d. Changing lane

6. Driver assistance system according to one of Claims 1 to 5, **characterized in that** the driving manoeuvre can be influenced at any time by the driver by the activation of an operator control element.

7. Driver assistance system according to one of Claims 1 to 6, **characterized in that** at least one operator control element is designed to influence directly the longitudinal or transverse guidance of the vehicle, **in that** an operator control element is formed, in particular, by the steering wheel and/or the accelerator pedal and/or the brake pedal of the vehicle.

8. Driver assistance system according to one of Claims 1 to 7, **characterized in that** at least one operator control element is designed to trigger, after the activation by the driver, a specific driving manoeuvre, in particular braking as far as the stationary state and/or a lane change, wherein the triggered driving manoeuvre is carried out in an automated fashion by the driver assistance system.

9. Driver assistance system according to one of Claims 1 to 8, **characterized in that** at least one operator control element is designed to transfer control to the driver after the activation by the driver.

10. Method for ensuring that a driver of a vehicle is vigilant during travel which is carried out in a partially automated fashion, **characterized in that** when specific driving situations occur the driver is requested, on the basis of map data, to activate an operator control element, wherein the partially automated driving manoeuvre is continued, adapted in its execution or ended depending on the activation of the operator control element.

11. Method according to Claim 10, **characterized in that** the activation of the operator control element exerts a direct influence (212) on the driving behaviour of the vehicle.

12. Method according to Claim 10, **characterized in that** the activation of the operator control element triggers a specific automatically executed driving manoeuvre (214).

13. Method according to Claim 10, **characterized in that** the activation of the operator control element triggers a complete transfer of control to the driver.

## Revendications

1. Système d'assistance au conducteur pour un véhicule, lequel est configuré pour guider le véhicule lors d'une conduite partiellement automatisée, **caractérisé en ce que** le système d'assistance au conducteur comporte au moins un élément de commande qui doit être actionné par le conducteur sur la base de données cartographiques en cas de survenance de certaines situations de conduite, ce par quoi la vigilance du conducteur est garantie pendant l'exécution du déplacement partiellement automatisé, et la manoeuvre de conduite partiellement automatisée (200) étant poursuivie, son exécution adaptée ou terminée en fonction de l'actionnement de l'élément de commande.

2. Système d'assistance au conducteur selon la revendication 1, lequel est conçu pour interrompre ou annuler la manoeuvre de conduite partiellement automatisée (200) actuelle ou pour amener le véhicule dans un état de faible risque ou pour poursuivre la manoeuvre de conduite partiellement automatisée (200) actuelle lorsque le conducteur omet d'actionner l'élément de commande.

3. Système d'assistance au conducteur selon l'une des revendications 1 ou 2, le système d'assistance au conducteur comportant au moins un moyen d'affichage qui est conçu pour fournir au conducteur des consignes à propos de la situation de conduite et/ou à propos de l'actionnement de l'élément de commande.

4. Système d'assistance au conducteur selon la revendication 3, **caractérisé en ce que** le moyen d'affichage est configuré pour délivrer des consignes sonores et/ou visuelles et/ou haptiques.

5. Système d'assistance au conducteur selon l'une des revendications 1 à 4, **caractérisé en ce que** la situation de conduite, lors de la survenance de laquelle le conducteur doit actionner l'élément de commande, est au moins l'une des situations de conduite suivantes :
a. arrêt à un passage pour piétons
b. arrêt et/ou démarrage à un feu de circulation
c. observation de la priorité
d. changement de voie.

6. Système d'assistance au conducteur selon l'une des revendications 1 à 5, **caractérisé en ce que** la manoeuvre de conduite peut être influencée à tout moment par le conducteur en actionnant un élément de commande.

7. Système d'assistance au conducteur selon l'une des revendications 1 à 6, **caractérisé en ce qu'**au moins un élément de commande est configuré pour exercer une influence directe sur le guidage longitudinal ou transversal du véhicule, **en ce qu'**un élément de commande est notamment formé par le volant de direction et/ou la pédale d'accélérateur et/ou la pédale de frein du véhicule.

8. Système d'assistance au conducteur selon l'une des revendications 1 à 7, **caractérisé en ce qu'**au moins un élément de commande est configuré pour déclencher une manoeuvre de conduite donnée après l'actionnement par le conducteur, notamment un freinage jusqu'à l'immobilisation et/ou un changement de voie, la manoeuvre de conduite déclenchée étant exécutée de manière automatisée par le système d'assistance au conducteur.

9. Système d'assistance au conducteur selon l'une des revendications 1 à 8, **caractérisé en ce qu'**au moins un élément de commande est configuré pour transférer intégralement le contrôle au conducteur après l'actionnement par le conducteur.

10. Procédé pour garantir la vigilance d'un conducteur d'un véhicule pendant une conduite exécutée de manière partiellement automatisée, **caractérisé en ce que** le conducteur est invité à actionner un élément de commande sur la base de données cartographiques en cas de survenance de certaines situations de conduite, la manoeuvre de conduite partiellement automatisée étant poursuivie, son exécution adaptée ou terminée en fonction de l'actionnement de l'élément de commande.

11. Procédé selon la revendication 10, **caractérisé en ce que** l'actionnement de l'élément de commande exerce une influence directe (212) sur le comportement de conduite du véhicule.

12. Procédé selon la revendication 10, **caractérisé en ce que** l'actionnement de l'élément de commande déclenche une certaine manoeuvre de conduite (214) exécutée de manière automatisée.

13. Procédé selon la revendication 10, **caractérisé en ce que** l'actionnement de l'élément de commande déclenche un transfert intégral du contrôle au conducteur.
